# EUROPEAN PATENT SPECIFICATION

(11) **EP 4 310 492 B1**
(45) Date of publication and mention of the grant of the patent: **18.02.2026**
(21) Application number: 22186321.0
(22) Date of filing: 21.07.2022
(51) Int. Cl.: G01N 27/9013, G01N 27/904

(54) **INSPECTION DEVICE FOR TUBULAR GOOD**
PRÜFVORRICHTUNG FÜR ROHRFÖRMIGE WARE
DISPOSITIF D'INSPECTION POUR PRODUIT TUBULAIRE

(43) Date of publication of application: 24.01.2024
(73) Proprietor: Vallourec Oil and Gas France, 59620 Aulnoye-Aymeries (FR)
(72) Inventor: KLING E SILVA, Lucas, 92190 Meudon (FR)
(74) Representative: Ben Dhia, Arwa

(56) References cited:
- US-A- 5 565 633
- US-A1- 2007 022 830
- US-A1- 2011 167 914
- US-A1- 2021 332 930

## Description

The present invention relates to the technical field of devices for inspecting tubular goods, in particular for oil country tubular goods, pipelines for transportation of petroleum, gas, water.

Tubular goods manufacturers, especially in the field of oil and gas, need to meet specific quality requirements concerning internal parameters, such as the wall thicknesses, internal diameters, or absence of defects at the surface.

Indeed, like most metallurgical products, tubes are liable to present defects linked to their manufacture or usage, such as material inclusions in the steel, cracks on their internal surface or their external surface, or even porosities. In general, any heterogeneity in the steel matrix is seen as an imperfection which is likely to harm the mechanical strength of the tube in service. Also, these metallurgical products can have surface defects due to metal loss, corrosion, or cracks. There is a need to inspect and detect defects both immediately after manufacturing or after use and re-use of a tubular.

The tubes are therefore checked after their manufacture or after period of use, not only to detect any defects therein, but also, where appropriate, to determine useful information for evaluating the dangerousness of these defects, in particular their size, their depth, their position, their nature or even their orientation, and the satisfaction of these tubes with standards. Tubes are also checked periodically during their lifetime, especially pipelines

Non-destructive testing techniques using eddy currents testing are used. For search of defects or properties of a material, eddy currents are generated at the surface of the tube and characteristics of eddy currents generated are measured over time.

Known non destructive testing (NDT) of an industrial object by eddy current testing identifies discontinuities, such as cracks or voids, by passage of a steady state alternating current or pulsed current waveform in a test probe transmitter coil that is electromagnetically coupled near an electrically conductive test object. The changing current flow in the probe transmitter generates a changing transmitted magnetic field waveform that in turn induces a generated eddy current in the electromagnetically coupled test object. Variations in the phase and magnitude of these generated eddy currents within the test object create a responsive or reflected magnetic field waveform that is in turn sensed by a test probe receiver coil as an induced received or reflected current flow. In some known eddy current NDT systems, the test probe's transmitter coil also functions as the receiver coil. Thus, variations in the electrical conductivity or magnetic permeability of the test object, or the presence of any flaws, will cause a change in eddy current and a corresponding change in the phase and amplitude of the reflected magnetic waveform as sensed by the test probe receiver changes in its current waveform. Amplitude and intensity of an eddy current within a test object will stay substantially constant if its magnetic transmission characteristics (which impact the reflected waveform) are substantially constant. Anomalies in the test object alter its magnetic transmission characteristics at the anomaly location. Accordingly, anomalies and their spatial location within the test object can be detected by determining if the magnetic transmission characteristics of the material being scanned are consistent with the presence or absence of an anomaly at each scan spatial location.

US2011/167914 relates to methods and apparatus for acquiring and processing data from a plurality of different sensor types for non-destructive testing of metallic structures. An electromagnetic acoustic transducer (EMAT) signal, an eddy current (EC) signal, a magnetic flux leakage (MFL) signal, and a deflection signal are acquired from each of a plurality of localized regions of a metallic structure, and are processed to characterize one or more features of the metallic structure based on at least two of the EMAT, EC, MFL, and deflection signals acquired from a common localized region in which at least a portion of the feature is located. An integrated multi-sensor device for non-destructive testing may be used to provide the EC, EMAT, MFL, and deflection signals for each of the plurality of localized regions of the metallic structure. Such integrated multi-sensor devices may be configured to provide an in-line inspection tool, such as an intelligent pig that is used to inspect the integrity of pipelines.

The patent US5565633 deals with a spiral pig apparatus provided for axial movement through a pipe of the type having a cylindrical interior surface defining a central axis. The spiral pig apparatus includes a first and a second section coupled to each other for axial movement of both sections and for relative rotation between the first and second sections. A first plurality of wheels is attached to the first section. Each of the first plurality of wheels is attached at a first rolling angle, relative to the pipe axis for rolling contact with the interior surface of the pipe, and for supporting the first section spaced inward from the interior surface of the pipe. A second plurality of wheels is attached to the second section. Each of the second plurality of wheels is attached at a second rolling angle, relative to the pipe axis for rolling contact with the interior surface of the pipe. The second rolling angle is different from the first rolling angle of the first set of wheels. The second plurality of wheels is also attached for supporting the second section spaced inward from the interior surface of the pipe. A drive mechanism is operatively connected to the spiral pig for causing the pig to move through the pipe, as the first and second sections rotate relative to each other.

Pipeline inspection apparatus are used in the industry. Nevertheless, they present limitation so as their resolution of inspection and these devices are expensive as they multiply the number of individual sensors to scan a tubular good. Also, they do not provide accurate positioning of the defect or property characterized.

The invention aims at overcoming the above-mentioned drawback.

More specifically, the invention aims at improving accuracy of measures in a cost-effective device.

Advantageously, scanning electronics and eddy current testing sensors are mounted on the rotating body such that scanning electronics and eddy current testing sensors are rotated at a same rotation speed during use of the device avoiding any signal noise coming from a slip-ring during acquisition.

The Inspection device for a tubular good may have a rotation speed of at most 6 rotations per second, preferably 3 rotations per seconds.

The inspection device for a tubular good comprises a first body part, a mains axis Xx corresponding to the direction of displacement of the inspection device along the length of a tubular good, a second body part rotatably mounted on the first body part, a body motor arranged to rotate the second body part around axis Xx relatively to the first body part, whereas the first body part comprises an odometer, an array of geometric profilometers arranged to measure radial coordinates of internal surface of the tubular good, the first body part further comprising a profilometer electronics arranged to store in a first memory each measured radial coordinates each associated with a circumferential position and a time stamp and the second body part comprises at least one array of eddy current test sensors and a scanning electronics arranged to collect and compute signals received by eddy current test sensors into response signals, the scanning electronics being further arranged to store each response signal associated with a corresponding time stamp in a second memory.

According to one aspect, the profilometers are distributed circumferentially on 360° and opposite each other and profilometer electronics is arranged to output internal diameter measurements.

According to another aspect, profilometer electronics is arranged to compute profile lines data computed from measurements of opposite profilometers and odometer.

According to one aspect, profilometer electronics is arranged to compute a mapping of internal surface of the tubular good by interpolation of data between profile lines data.

According to one aspect, profilometer electronics is arranged to output a first set of data associating a profilometer identification, a position measurement and time stamp, and to compute a second set of data associating a circumferential position, a radial position, a time stamp.

According to one aspect, the inspection device comprises a third electronics arranged to compute from the first set of data and the second set of data a defects heat map of internal surface.

The inspection device for a tubular good may further comprise multiple arms mounted on the second body part, the eddy current testing sensors being housed in a corresponding shoe pivotably mounted on a top part being rotatably mounted on a lower part, said lower part being pivotably mounted on the second body part.

According to another aspect, the inspection device for a tubular good comprises at least one array of four eddy current sensors arranged to detect defects on an internal surface of a tubular good.

In a variation, the inspection device for a tubular good comprises three arrays of four arms, each arm having at least one eddy current testing sensors, preferably at least two eddy current testing sensors.

The present invention and its advantages will be better understood by studying the detailed description of specific embodiments given by way of nonlimiting examples and illustrated by the appended drawings on which:
- figure 1 is a perspective view of a device according to a first embodiment of the invention,
- figure 2 is an axial cross-section view of the device of figure 1,
- figure 3 is a perspective view of a first mounting of an eddy current test sensor on the inspection device of the invention,

It is defined an orthonormal direct vector basis attached to the body parts of the device. The vector basis consists of a vector X, a vector Y and a vector Z. The vector X is parallel to a longitudinal direction of bodies of the device, so defining an axis Xx going through center of the bodies.

In the present application, the word "cylindrical" and variations thereof will be understood according to its common definition, being namely that a cylindrical surface is a surface consisting of all the points on all the lines which are parallel to a given line and which pass through a fixed plane curve in a plane not parallel to the given line.

In the present application, unless specified otherwise, the terms "axial", "radial", "tangential" and variations thereof will be understood referring relative to the axis Xx.

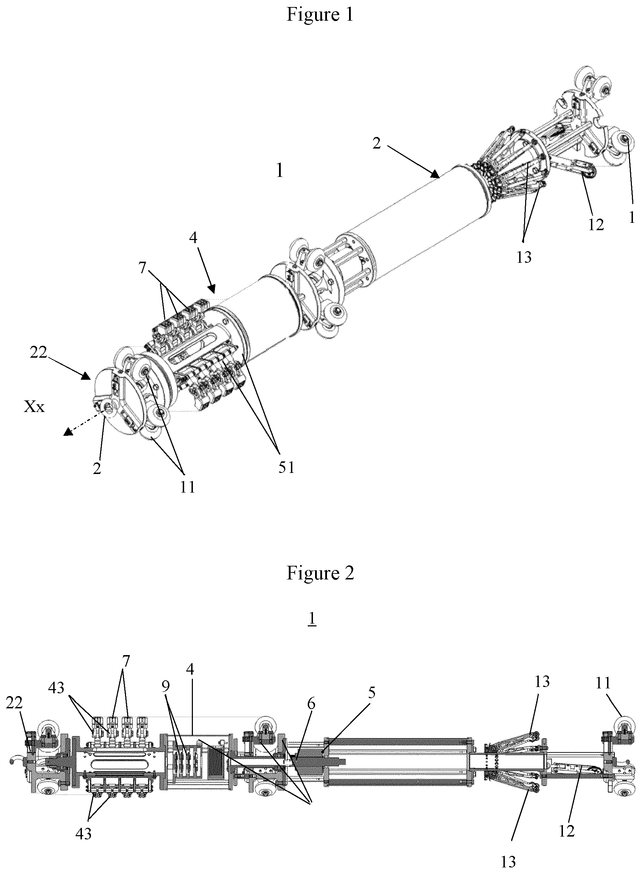

Figure 1 is a perspective representation of an inspection device 1 for a tubular good according to a first embodiment of the invention. The inspection device comprises a first body part 2 and a second body part 4. The second body part 4 is rotatably mounted on first body part 2. The inspection device comprises a body motor 5 arranged to rotate the second body part 4 relatively to the first body part 2. The relative rotation speed of the second body part 4 relatively to the first body part 2 is at least 0.5 rotation per second.

Trials have been done with prototypes of device according to invention and rotation speed was set at 1 rotation per second to the benefit of efficiency of the measurements done with the inspection device 1. The rotation speed can be increased up to 2 rotations per second.

The first body part 2 is arranged to position the inspection device 1 into the tubular good to be inspected and to allow propelling or to propel the inspection device 1 into the tubular good. Thus, the inspection device can have a translation into the tubular good to be inspected at a speed between 0.1 and 0.25 m/s.

An inspection of a 12 meters pipe can take from 1 to 5 minutes.

In the embodiment of figure 1, the second body part comprises a hook 21 visible on fig. 4 which is an axial cross-section view of the inspection device 1 of figure 1. The inspection device 1 also comprises a third body part 22 which is axially positioned on a side of the second body part 4 opposite of the side where first body part 2 is linked to second body part 4. The third body part 22 is rotatably assembled to the second body part 4. The third body part 22 also comprises a hook 23. The hooks 21, 23 allow an operator or a machine to pull the inspection device 1 into a tubular good in both directions along axis Xx.

Also, the inspection device 1 may comprise a propelling motor mounted on first body part 2 to propel the inspection device 1, which is particularly useful when the tubular good has a long length, such as a pipeline.

The first body part 2 comprises wheels 11 to allow displacement of the inspection device 1. Wheels 11 are distributed on at least two axial locations and circumferentially on 360°. In the present embodiment, the Inspection device has two sets of 3 wheels 11 on the first body part 2 and a set of three wheels 11 on the third body part 22.

The first body part 2 comprises an odometer 12. Odometer 12 counts travel distance of the inspection device inside the tubular good so that longitudinal position of the inspection device 1 in the tubular device is determined.

The inspection device of figure 1 is supplied with electrical energy brought by an electrical cable not represented. Alternatively, the inspection device may have batteries housed in first body part 2.

The inspection device 1 comprises a body motor 5 driving in rotation the second body part 4 relatively to the first body part 2. Considering the point of contacts of the first body part 2 into a tubular good that provide resistance to rotation to the first body part 2, the second body part 4 will rotate inside the tubular good.

The inspection device 1 comprises a slip ring 6 between the first body part 2 and the second body part 4 to electrically connect the first body part 2 to the second body part 4. This electrical connection is arranged to provide electrical power to equipment embedded in the second body part 4, that is scanning electronics 9.

In a variation, a data link can be established wirelessly between the first body part 2 and the second body part 4.

In an alternative variation, data measured or computed by scanning electronics 9 can be retrieved on one side, data measured by odometer's electronic can be retrieved on another side, and the data may be merged in a third electronic, said third electronic may be a computer terminal.

The second body part 4 comprises eddy current sensors 7. The eddy current sensors are arranged to detect defects such as cracks, folds, and other surface defects in the magnitude of 0.5 x 0.5 mm in depth and width.

According to one aspect, the eddy current sensors 7 comprises a first coil, and a second coil. First coil is orthogonal to second coil. the first coil and the second coil are each made of a winding of a wire around a parallelepiped core in Teflon. The windings of the first and second coils is such that the respective wires are interlaced. Wire may be AWG Enameled Copper Wire 40. This particular structure of the eddy current test sensors provides a synergistic effect with the rotating second body part 4 of the inspection device 1 and the mounting of said sensors on said second body part 4. Indeed, the ability of the mounting to reduce lift off of the sensors from an internal surface of a tubular good, along with the described structure of the sensor lowers greatly the lift off effect which generates noise in the measured signal. Whereas classic eddy current test sensors achieve a signal to noise ratio of 40dB, the eddy current test sensors 7 of invention as described above achieves a signal to noise ratio of 8dB.

The eddy current test sensors 7 may detect defects oriented longitudinally, transversely, or obliquely. Defects may be cracks, folds, or other defects.

An important aspect of the invention is that the second body part 4 comprises scanning electronics 8 which is arranged to trigger the eddy current test sensors, and the scanning electronics 8 is further arranged to compute a response data based on at least one of the magnetic properties of the sensor response chosen from impedance map, resistance map, phase map and reactive inductance map. The tests conducted show that having the scanning electronic mounted within the second body part 4 improves the signals with less noise generated in comparison with such an electronic mounted on the first body part 2, the scanning electronic then being linked to the eddy current test sensors through the slip ring 6. Having the scanning electronics rotating together with the eddy current test sensors in the second body part 4 avoid degradation of signal by slip ring 6. Indeed, slip ring 6 introduces noise in the signal, so there is advantage to apply a treatment of the signal coming from an eddy current test sensor 7 prior to any passage of the signal through the slip ring. Advantageously, no response signal goes through the slip ring, as response signal is stored in a memory in scanning electronic 8 associated with a time stamp and is able to be transmitted to a third electronic, either located in the second body part or the third electronic being a computer terminal that can be linked to the second body part and/or first body part when the inspection device is not running measurements, for example, after measurement operations of the inspection device 1.

On another aspect, the first body part 2 comprises profilometers 13. Profilometers 13 are arranged to measure internal profile of a tubular good. Profilometers 13 are distributed circumferentially on 360° around the inspection device 1. Each profilometer comprises a finger with a first finger extremity mounted in rotation on the first body part 2, the axis of said rotation being in a plane orthogonal to main axis X of inspection device 1, the finger comprising at the second extremity a wheel to roll on an internal surface of a tubular good. The profilometers each comprise a spring pushing the finger away from the second body part, and a finger encoder to determine the degree of rotation of the finger. A profiling electronic computes the internal profile of the tubular good from the measurements done by each profilometer and associated with odometer measurements. Said profiling electronic may be in the first body part 2 are alternatively in the second body part 4, or alternatively outside the inspection device in a computer terminal.

Advantageously, the profilometers are distributed such that a first profilometer 13 has a corresponding second profilometer 13 placed in mirror to the first profilometer along axe Xx, such that the first profilometer and the second profilometer may measure an internal diameter of the tubular good.

Advantageously, the inspection device 1 comprises 16 profilometers 13, profilometers being opposite each other, enabling measurement of internal diameters in eight directions.

In addition to internal diameter measurements, the profilometers 13 lead to characterization of large geometrical defects such as general corrosion.

A profilometer electronics outputs internal diameters all along the pipe length and profile lines data computed from measurements of opposite profilometers 13.

In an aspect, the profilometer electronics is arranged to compute a mapping of internal surface of the tubular good by interpolation of data between profile lines data. Indeed, profilometers 13 have each a known circumferential position, each profilometer 13 measure a radial position at a known time, and profilometers electronics is arranged to compute for any circumferential position between two profilometers 13 an interpolated radial position for the same known time.

Then, the profilometer electronics is arranged to output a first set of data associating profilometer identification, position measurement and time stamp, and to compute a second set of data associating circumferential position, radial position, time stamp.

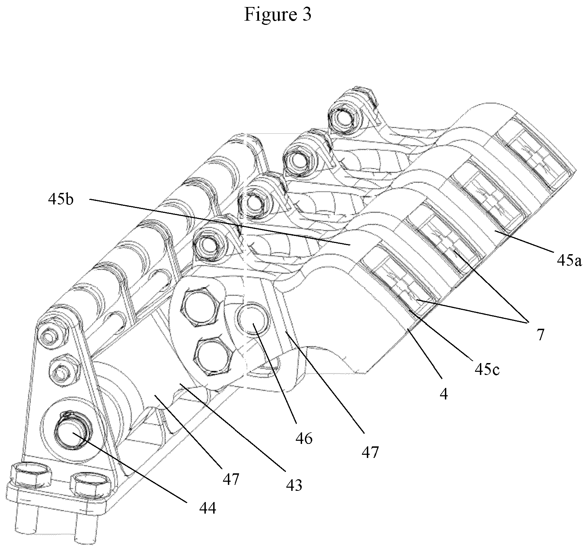

As can be seen on figure 3 representing a mounting of an array of eddy current test sensors, the eddy current tests sensors 7 are mounted on a first extremity of rotating arms 43 detailed. Rotating arms 43 have a second extremity which are mounted on the second body part 4 thanks to a pivot liaison 44. The rotation axis of pivot liaison 44 is substantially parallel to main axis X of inspection device 1. Such degree of freedom of the rotating arms 43 allow the eddy current tests sensors 7 to fit the internal wall of the tubular good to be inspected. A spring element as a rotary spring included in pivot liaison 44 pushes the first extremity of rotating arms 43 away from the axis Xx. The rotating arms can have multiple operating positions between a retracted position and a deployed position. Therefore, the inspection device 1 can easily fit into tubular goods of different internal diameters and operates the eddy current test measurements. The prototype developed can fit in tubular goods ranging from 3.5 inches to 7 inches, which allows to have one device for inspecting multiple sizes of tubular goods. Even greater sizes are accessible with a unique device.

The sensors are mounted in a shoe 45 having a top surface 45a arranged to be in contact with arcuate surface of inner wall of the tubular good. The top surface 45a comprises sacrificial pad 45c protecting the top surface 45a of the shoe 45 from wear due to friction between the shoe and the inner wall of the tubular good. Shoe 45 has a stabbing surface 45b having an arcuate profile, to smoothen the entry in contact of the shoe 45 and the inner wall of the tubular good. The rotating arm 43 comprises a top part 47a on which is mounted the shoe 45, said top part 47a being rotatably mounted on a lower part 47b through a second liaison pivot 46, which provides for further adaptation of the positioning of the shoe and improves contact between the shoe and an internal wall of the tubular good. The two pivot liaisons have respective centers which are not aligned with axis Xx of the inspection device. The arms improve the coupling between the eddy current test sensors and the internal surface of the tubular good, by compensating geometrical variations of the internal surface, thus contributing to lower the signal to noise ratio, and achieving with the structure of the sensors a greatly reduced signal to noise ratio.

This also further improves the adaptability of the rotating arms to different internal diameters to be inspected.

Indeed, when the inspection device is operating an inspection of a tubular good, the second body part 4 is rotating under drive of body motor 5 at a rotational speed ranging from 0.5 rotation per second to 6 rotations per second. Trials have been conducted at the speed of 1 rotation per second. Thus, the eddy current test sensors, are rotating at the rotating speed of the second body part 4.

The scanning electronics 9 triggers each of the eddy current test sensors at a time interval such that on one turn of the sensors, several bursts are triggered at regular time intervals. It results from this a resolution of scanning which is far greater than the scan that could be operated by an inspection device having non-rotating eddy current test sensors, that must be spaced radially one from each other. This spacing between sensors generating blind spots in the inspection.

The device of figure 1 comprises four rows of three rotating arms 43 having each two eddy current test sensors 7, so that there are 24 eddy current test sensors. As all these sensors are rotating during an inspection, the sensors make measurements at a great quantity of positions, resulting in a resolution of 2x2mm on 360° with a detection capability of defects of size 0.5x0.5mm.

Scanning electronics 9 collects the signals received by eddy current test sensors in response to each interrogation, resulting in response values that are stored in a memory of the scanning electronics 9 associated with at least a time stamp, so that position is radially and longitudinally known thanks to the time stamp, as on the other side, the longitudinal position of the inspection device 1 is given by odometer 12, which outputs incremental longitudinal positions, and each longitudinal position being time stamped. In an analog manner, the rotation of the second body part is monitored through the driving electronics of the motor, outputting time stamped circumferential positions. Consequently, longitudinal, and circumferential positions of each sensor is known at each time of the inspection. And scanning electronics 9 can generate a set of eddy current test data associating response values, eddy current test sensor identificatory, time stamp.

Eddy current test data can be transmitted to third electronics. Said third electronics is arranged to compute from the set of profilometer data and the set of eddy current test data a mapping representing internal geometry of an inspected tubular good including heat values for each represented pixel, leading to accurate identification and characterization of possible defects on said internal surface.

## Claims

1. Inspection device (1) for a tubular good comprising a first body part (2), a mains axis Xx corresponding to the direction of displacement of the inspection device (1) along the length of a tubular good, a second body part (4) rotatably mounted on the first body part (2), a body motor (5) arranged to rotate the second body part (4) around axis Xx relatively to the first body part (2), whereas the first body part comprises an odometer (12), an array of geometric profilometers (13) arranged to measure radial coordinates of internal surface of the tubular good, the first body part (2) further comprising a profilometer electronics arranged to store in a first memory each measured radial coordinates each associated with a circumferential position and a time stamp, and the second body part (4) comprising at least one array of eddy current test sensors and a scanning electronics (9) arranged to collect and compute signals received by eddy current test sensors (7) into response signals, the scanning electronics (9) being further arranged to store each response signal associated with a corresponding time stamp in a second memory.

2. Inspection device (1) for a tubular good according to claim 1 wherein profilometers (13) are distributed circumferentially on 360° and opposite each other and profilometer electronics is arranged to output internal diameter measurements.

3. Inspection device (1) for a tubular good according to claim 2 wherein profilometer electronics is arranged to compute profile lines data computed from measurements of opposite profilometers (13) and odometer (12).

4. Inspection device (1) for a tubular good according to claim 2 wherein profilometer electronics is arranged to compute a mapping of internal surface of the tubular good by interpolation of data between profile lines data.

5. Inspection device (1) for a tubular good according to any of the preceding claims, wherein profilometer electronics is arranged to output a first set of data associating a profilometer identification, a position measurement and time stamp, and to compute a second set of data associating a circumferential position, a radial position, a time stamp.

6. Inspection device (1) for a tubular good according to any of the preceding claims further comprising a third electronics arranged to compute from the first set of data and the second set of data a defects heat map of internal surface.

7. Inspection device for a tubular good according to any of the preceding claims comprising multiple arms mounted on the second body part, the eddy current test sensors being housed in a corresponding shoe, each shoe being mounted on a top part (47a) being pivotably mounted on a lower part (47b), said lower part (47b) being pivotably mounted on the second body part (4).

## Patentansprüche

1. Prüfvorrichtung (1) für eine Rohrware, die eine erste Körperkomponente (2), eine Hauptachse Xx, die der Verlagerungsrichtung der Prüfvorrichtung (1) entlang der Länge einer Rohrware entspricht, eine zweite Körperkomponente (4), die auf der ersten Körperkomponente (2) drehbar angebracht ist, einen Körpermotor (5), der ausgelegt ist, die zweite Körperkomponente (4) relativ zur ersten Körperkomponente (2) um die Achse Xx zu drehen, wohingegen die erste Körperkomponente einen Wegmesser (12) und eine Anordnung geometrischer Profilometer (13), die ausgelegt sind, radiale Koordinaten der Innenfläche der Rohrware zu messen, umfasst, wobei die erste Körperkomponente (2) ferner eine Profilometerelektronik umfasst, die ausgelegt ist, die jeweils gemessenen radialen Koordinaten, die jeweils einer Umfangsposition und einem Zeitstempel zugeordnet sind, in einem ersten Speicher zu speichern, und wobei die zweite Körperkomponente (4) mindestens eine Anordnung von Wirbelstrom-Prüfsensoren und eine Abtastelektronik (9), die ausgelegt ist, Signale, die durch die Wirbelstrom-Prüfsensoren (7) empfangen werden, zu erfassen und in Antwortsignale umzurechnen, umfasst, wobei die Abtastelektronik (9) ferner ausgelegt ist, jedes Antwortsignal einem entsprechenden Zeitstempel zugeordnet in einem zweiten Speicher zu speichern.

2. Prüfvorrichtung (1) für eine Rohrware nach Anspruch 1, wobei die Profilometer (13) umlaufend über 360° und einander gegenüberliegend verteilt sind und die Profilometerelektronik ausgelegt ist, interne Durchmessermessungen auszugeben.

3. Prüfvorrichtung (1) für eine Rohrware nach Anspruch 2, wobei die Profilometerelektronik ausgelegt ist, Profilliniendaten zu berechnen, die aus Messungen von gegenüberliegenden Profilometern (13) und des Wegmessers (12) berechnet werden.

4. Prüfvorrichtung (1) für eine Rohrware nach Anspruch 2, wobei die Profilometerelektronik ausgelegt ist, eine Abbildung einer Innenfläche der Rohrware durch Interpolation von Daten zwischen Profilliniendaten zu berechnen.

5. Prüfvorrichtung (1) für eine Rohrware nach einem der vorhergehenden Ansprüche, wobei die Profilometerelektronik ausgelegt ist, einen ersten Datensatz auszugeben, der eine Pofilometerkennung, eine Positionsmessung und einen Zeitstempel zuordnet, und einen zweiten Datensatz zu berechnen, der eine Umfangsposition, eine radiale Position und einen Zeitstempel zuordnet.

6. Prüfvorrichtung (1) für eine Rohrware nach einem der vorhergehenden Ansprüche, die ferner eine dritte Elektronik umfasst, die ausgelegt ist, aus dem ersten Datensatz und dem zweiten Datensatz eine Fehlerwärmeabbildung der Innenfläche zu berechnen.

7. Prüfvorrichtung für eine Rohrware nach einem der vorhergehenden Ansprüche, die mehrere Arme umfasst, die auf der zweiten Körperkomponente angebracht sind, wobei die Wirbelstrom-Prüfsensoren in einer entsprechenden Aufnahme aufgenommen sind, wobei jede Aufnahme auf einer oberen Komponente (47a) angebracht ist, die auf einer unteren Komponente (47b) drehbar angebracht ist, wobei die untere Komponente (47b) auf der zweiten Körperkomponente (4) drehbar angebracht ist.

## Revendications

1. Dispositif d'inspection (1) pour un article tubulaire comprenant une première partie de corps (2), un axe principal Xx correspondant à la direction de déplacement du dispositif d'inspection (1) dans le sens de la longueur d'un article tubulaire, une deuxième partie de corps (4) montée rotative sur la première partie de corps (2), un moteur de corps (5) conçu de manière à faire tourner la deuxième partie de corps (4) autour de l'axe Xx par rapport à la première partie de corps (2), la première partie de corps comprenant un odomètre (12), un réseau de profilomètres géométriques (13) conçus de manière à mesurer les coordonnées radiales de la surface interne de l'article tubulaire, la première partie de corps (2) comprenant en outre une électronique de profilomètres conçue de manière à stocker, dans une première mémoire, chacune des coordonnées radiales mesurées qui est associée à une position circonférentielle et à un horodatage, et la deuxième partie de corps (4) comprenant au moins un réseau de capteurs de test par courants de Foucault et une électronique de balayage (9) conçue de manière à collecter et traiter des signaux reçus par des capteurs de test par courants de Foucault (7) pour générer des signaux de réponse, l'électronique de balayage (9) étant conçue en outre de manière à stocker, dans une deuxième mémoire, chaque signal de réponse associé à un horodatage correspondant.

2. Dispositif d'inspection (1) pour un article tubulaire selon la revendication 1, dans lequel des profilomètres (13) sont répartis circonférentiellement sur 360° et en opposition les uns aux autres, et l'électronique de profilomètres est conçue de manière à délivrer des mesures de diamètre interne.

3. Dispositif d'inspection (1) pour un article tubulaire selon la revendication 2, dans lequel l'électronique de profilomètres est conçue de manière à calculer des données de lignes de profil calculées à partir de mesures de profilomètres (13) opposés et de l'odomètre (12).

4. Dispositif d'inspection (1) pour un article tubulaire selon la revendication 2, dans lequel l'électronique de profilomètres est conçue de manière à calculer une cartographie de la surface interne de l'article tubulaire par interpolation de données entre des données de lignes de profil.

5. Dispositif d'inspection (1) pour un article tubulaire selon l'une quelconque des revendications précédentes, dans lequel l'électronique de profilomètres est conçue de manière à délivrer un premier jeu de données associant une identification de profilomètre, une mesure de position et un horodatage, et de manière à calculer un deuxième jeu de données associant une position circonférentielle, une position radiale, un horodatage.

6. Dispositif d'inspection (1) pour un article tubulaire selon l'une quelconque des revendications précédentes, comprenant en outre une troisième électronique conçue de manière à calculer, à partir du premier jeu de données et du deuxième jeu de données, une carte thermique des défauts de la surface interne.

7. Dispositif d'inspection pour un article tubulaire selon l'une quelconque des revendications précédentes, comprenant plusieurs bras montés sur la deuxième partie de corps, les capteurs de test par courants de Foucault étant logés dans un sabot correspondant, chaque sabot étant monté sur une partie supérieure (47a) qui est montée pivotante sur une partie inférieure (47b), ladite partie inférieure (47b) étant montée pivotante sur la deuxième partie de corps (4).
